# EUROPEAN PATENT SPECIFICATION

(11) **EP 0 382 528 B1**
(45) Date of publication and mention of the grant of the patent: **18.01.1995**
(21) Application number: 90301337.3
(22) Date of filing: 08.02.1990
(51) Int. Cl.: G11B 7/013

(54) **Optical disk**
Optische Platte
Disque optique

(30) Priority: 08.02.1989 JP 28854/89
(43) Date of publication of application: 16.08.1990
(73) Proprietor: FUJITSU LIMITED, Kawasaki-shi, Kanagawa 211 (JP)
(72) Inventor: Nakashima, Kazuo, 889-2, Tsumada, Atsugi-shi, Kanagawa 243 (JP); Hashimoto, Yasunobu, Sagamihara-shi, Kanagawa 229 (JP); Maeda, Miyozo, Atsugi-shi, Kanagawa 243 (JP); Ogawa, Seiya, Kanagawa 215 (JP)
(74) Representative: Fane, Christopher Robin King

(56) References cited:
- EP-A- 0 232 134
- EP-A- 0 275 972

## Description

The present invention relate to an optical disk, provided with read-exclusive and write-enable regions.

Optical disks are media on which information can be recorded and from which information can be reproduced by a laser beam or a magnetic field. They can be grouped into three types, reproduction-exclusive (otherwise known as read-exclusive or read-only), information-adding (or write-once-read-many), and rewrite, depending upon how they may be used.

The reproduction-exclusive type of optical disk comprises a transparent disk-like substrate made of glass or resin such as polycarbonate and covered with a reflective film made of a metal such as aluminium. Information is recorded on this film in the form of physical marks of concave or convex form, and it is used exclusively for reading.

In an information-adding type of disk, a recording film made of an easily-sublimed material such as tellurium (Te) is formed on the above-described substrate and information is recorded on it as a series of marks in the form of holes by means of a laser beam. Information is read by detecting these holes and such information can be written on the disk only once.

The re-write type may employ the magnetooptic effect (MO), phase change or the like. Where the magnetooptic effect (MO) is employed, a vertically magnetized film is formed on the substrate and information is recorded on it in the form of magnetic marks, the magnetic film being magnetized in various directions by heat produced by a strong laser beam in the presence of an external magnetic field produced by additional coils. On the other hand, reproduction of information is carried out by directing a weak laser beam onto the magnetic film, in the absence of the external magnetic field, and by detecting polarization plane angles of light thus reflected.

This relies on the so-called Kerr effect, according to which polarization plane angles of reflected light differ from one another depending upon the directions of magnetization at a domain, or on the Faraday effect, according to which the polarization plane of light rotates when it passes through an opto-magnetic material. For the phase-change type of optical disk, the recording film creates two phase changes between non-crystal and crystal or between two crystal states, depending upon temperature change. Reproduction of recorded signals is carried out using the fact that the reflection factor of light differs depending upon whether the recording film is crystal or non-crystal, or whether the recording film is in a first crystal state or in a second crystal state.

The reproduction-exclusive type of optical disk has the advantage that a great many copies can be produced from it. It is used in digital audio and video disks.

The information-adding type of optical disk is write-enabled, has a long life, and when one writing is made on it there is little fear of recorded signals being mistakenly erased. It is therefore used, in preference to document files and magnetic tapes, as memory means, image data files and back-ups for rewrite type optical disks.

The re-write type optical disk is also write enabled, permits repeated re-writes, and is therefore used in external memory means for computing machines.

A conventional optical disk of any one of the above-mentioned kinds may have its entire recordable surface used exclusively either as a read-enable memory or as a write-enable memory.

The read-only or reproduction-exclusive type of optical disk, for example, enables a large quantity of memory to be recorded on it. Further, it can be randomly accessed easily and a great many copies can be produced from it. Furthermore, it is inexpensive and it is therefore assumed that it can be used for word processor dictionaries and font-pattern storage, or disks for program and operation manual storage for computers.

Such read-only optical disks, however, can only be used exclusively for reproduction and are entirely factory-produced. When they are supplied for word processor dictionaries, therefore, users cannot enrich them because they cannot register special font patterns such as "Kanji" (Chinese characters) as external characters, and special words and phrases necessary for business, for example, cannot be added to the dictionaries.

It may be desirable to add some functions to a program, or the program may need to be patched to correct bugs in it. This patching is often made in the form of a short program.

When a program stored in a reproduction-exclusive type optical disk is supplied to users, however, they cannot re-write the program data. Even when the program can be corrected by patching, they are forced to buy a new reproduction-exclusive type optical disk to make a minor correction to the program The need to produce such new disks whenever programs are to be corrected can impose an impracticably heavy burden on the program suppliers.

It is therefore supposed that demand for an optical disk with a write-enable region, on which users can write any information they like, as well as a read-exclusive region, will increase in the future.

For example, European Patent Application EP-A-0232134 discloses an optical disk having a read-exclusive region and a write-enable region, the said write-enable region being located radially outwardly of the read-exclusive region. An alternative form of disk having both write-enable and read-exclusive regions is disclosed in European Patent Application EP-A-0275972, where such regions apparently alternate along a track between adjacent turns of a spiral groove.

When using an optical disk having read-exclusive and write-enable regions, items such as mathematical formulae which do not need to be re-written can be recorded on its read-exclusive region whereas operational and process results can be recorded on its write-enable region.

Two kinds of recording systems that may be employed with such disks are known respectively as mark-length and mark-position recording systems, but these are not discussed in the above-mentioned prior publications.

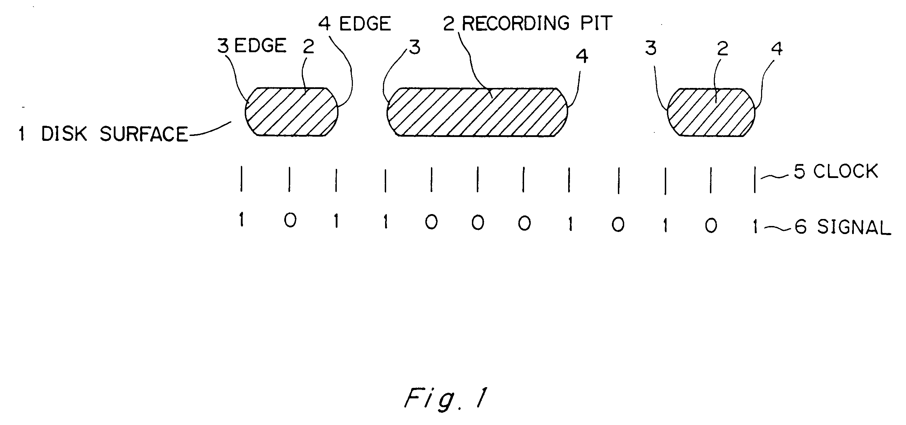

Figure 1 of the accompanying drawings is intended to illustrate a mark-length recording system. In this recording system, an edge 3 or 4 of a recording mark constituted by a pit 2 denotes signal "1", and absence of an edge denotes signal "0". The pits 2 show how signals 6 are recorded on the disk in synchronism with clock signals 5.

More specifically, an edge 3 over which the scanning laser beam passes when it moves from the disk surface 1 onto a recording pit 2, or an edge 4 over which the scanning laser beam passes when it comes out of the recording pit 2 onto the disk surface 1, represents signal "1", while the surface 1 of the disk which has no edge 4, or the bottom of the recording pit 2, denotes signal "0". Information is reproduced by detecting whether or not an edge 3 or 4 of a recording pit 2 is present in any of the positions corresponding to clock signals 5 when a reading laser beam is incident on those positions. This mark-length recording system may also be referred to as a recording system using mark-length modulation.

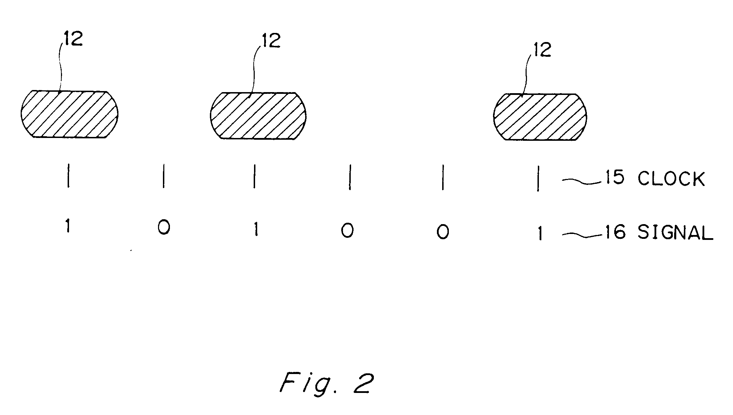

Figure 2 of the accompanying drawings is intended to illustrate the mark-position recording system. Signal "1", corresponding to a clock signal 15, is recorded on the disk by the formation of a recording pit 12 at the location concerned by an incident laser beam, and signal "0" is denoted by the absence of a recording pit 12 at the location concerned. For this mark-position recording system, information is read by detecting whether or not a recording pit 12 is present at a reading beam incident position that corresponds to a clock signal 15. This mark-position recording system may alternatively be referred to as a recording system using mark-position modulation.

In comparing the above two recording systems it is found that, for the same recording mark density, the mark-length recording system has a recorded signal density twice that of the mark-position recording system, because the former system uses the edges 3 and 4 of a recording mark (such as a hole or recording pit 2) rather than just the mark itself. For the mark-length recording system, however, position control must be more precise, in order to locate edges 3 and 4 accurately in synchronization with clock signals 5.

The mark-length recording system has been employed for read-exclusive type optical disks, whose factory manufacturer enables the required concaves and convexes to be pre-formed on the disk with high positional accuracy. The rotation control of the optical disk has then generally been carried out according to a CLV (constant linear velocity) method, for example as mentioned in EP-A-0275972. On the other hand, the mark-position recording system has been employed for write-enable optical disks, because it is difficult to position the recording pits on the disk very accurately under non-factory conditions. Rotation of the disk is generally controlled in this case according to a CAV (constant angular velocity) method.

In the CLV method, the linear velocity at which information is recorded on a track of a disk and reproduced from it is made constant for all tracks. As the tracks approach the outer circumference of the disk, therefore, the number of recording pits formed per track becomes larger. This affords a higher memory capacity. However, the rotation control of a spindle motor for driving the optical disk in this way is relatively complicated.

In the CAV method, the rotational speed of the spindle motor is constant and the recording and reproducing frequency is not changed. This simplifies control of the spindle motor, and the control circuit system for the spindle motor, and enables the spindle motor itself to be made smaller. However, the memory capacity per track on the disk is determined by the maximum permitted number of recording marks (or the maximum information content) which can be recorded on the innermost track of the disk. The total memory capacity of the disk is thus smaller than could be achieved with the CLV method.

According to the present invention there is provided an optical disk having a read-exclusive region and a write-enable region, the said write-enable region being located on the disk radially outwardly of the said read-exclusive region, characterised in that information is recorded on tracks in the said read-exclusive region in accordance with a mark-length recording system having a first maximum permitted number of recording marks per track, and information is recorded on tracks in the said write-enable region in accordance with a mark-position recording system having a second maximum permitted number of recording marks per track, which second number is double the said first number so that reading of the information on the said write-enable region can be carried out with the disk rotating at an angular velocity such that the information on the said read-exclusive region can be read without changing that angular velocity.

The read-exclusive region may be located at an inner circumferential edge of the disk, and the write-enable region may be located at the outer circumferential edge of the disk.

Because the CAV method, which enables the rotation of the spindle motor to be easily controlled, can be used to record information on a disk embodying the present invention and to reproduce information from the disk, access speed can be made desirably high when the disk is used as a peripheral device for a computer. If mark-position recording were to be used throughout the disk, the maximum permitted number of recording marks in the outermost write-enable track could not exceed that in the innermost read-exclusive track, but the use of mark-length recording in the read-exclusive region effectively doubles the maximum number of recording marks that can be permitted in the write-enable region where mark-position recording is used, whilst still permitting use of the CAV method.

Read-exclusive and write-enable regions may be arranged alternately, starting from an inner circumference of the disk and moving to the outer circumference, in a radial direction. Information is recorded on the read-exclusive regions according to a mark-length recording system and user information is recorded on and reproduced from the write-enable regions according to a mark-position recording system.

When recording information on a write-enable region of such a disk, according to a mark-position recording system, the angular rotation velocity of the disk may be made slower than that selected when information is read from a read-exclusive region, provided that the recording frequency employed is set so as to make the recording capacity per track on the write-enable region equal to the recording capacity per track on the read-exclusive region. Accordingly, when information is being read from the write-enable region the angular velocity of the disk can be set equal to that used when information is read from the read-exclusive region. Such a method of recording information on the write-enable region can serve to reduce the problem of deterioration in recording sensitivity caused by the fact that the effective amount of light, from an incident laser beam, serving to record a mark is reduced when operating at a high angular velocity as compared with the situation when using a lower angular velocity.

The use of the same angular velocity for reproduction of information from both the read-exclusive and write-enable regions can enable the access speed to be made high when information is read.

Still further, when the read-exclusive and write-enable regions are arranged alternately on the disk, as described above, and information is recorded according to the mark-position recording system, rotation control of the disk may be carried out according to multi-stage CAV method in which different angular velocities of the disk are used respectively for different write-enable regions of the disk, the recording frequency being adjusted accordingly.

This variable control of recording frequency is carried out in such a way that the memory capacity per track of information recorded on each write-enable region is made equal to that on the corresponding read-exclusive region. Furthermore, it is arranged in this case that the angular velocity employed when the information is read from the disk is the same for all read-exclusive and write-enable regions.

Reference will now be made, by way of example, to the accompanying drawings, in which:
Figure 1 is a diagram illustrating a mark-length recording system;
Figure 2 is a diagram illustrating a mark-position recording system;
Figure 3 shows a perspective view of an optical disk embodying the present invention;
Figure 4 is a diagram illustrating how information is recorded on read-exclusive and write-enable regions of the disk of Figure 3;
Figures 5A and 5B are schematic diagrams showing the make-up of respective sectors of the read-exclusive and write-enable regions;
Figure 6 is a block diagram of optical disk drive circuitry for controlling the reading and writing of information on the disk;
Figure 7 is a flowchart showing a reading sequence performed in the circuitry of Figure 6, and
Figure 8 shows a diagrammatic perspective view of a second optical disk embodying the present invention.

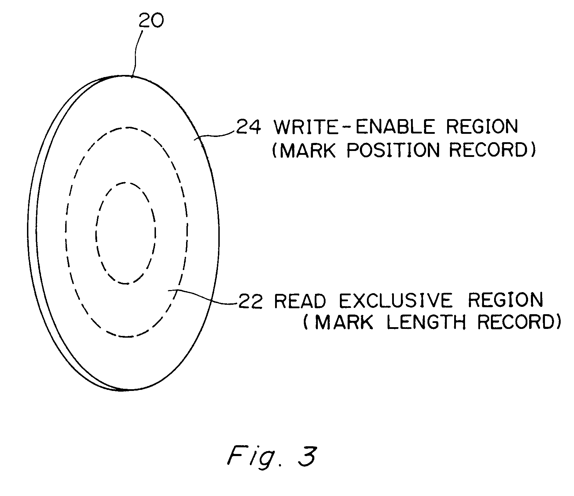

Figure 3 shows an optical disk 20 made by coating a transparent substrate with a light-sensitive substance such as TbFeCo, TbFe, or GdGeCo, by sputtering or vapour deposition preferably, with lower and upper layers of dielectric material such as SiO₂, SiN or Ti+SiO₂ to protect the light sensitive layer. The disk is 5 inches in diameter and is made of glass or a plastic such as polycarbonate resin. By causing a strong laser beam to be incident thereon, a mark can be recorded thermo-magnetically on the light sensitive layer, but when a weak laser beam is incident thereon the laser acts as a reflection film which reflects the weak laser beam. By subjecting it to a strong laser beam in the presence of an externally applied weak magnetic field, information can be rewritten on the light sensitive layer by light modulation. In this way, information already recorded on the disk can be erased and overwritten by new information.

As shown in Figure 3, a read-exclusive region 22 from which information can be read comprises an inner circumferential region of the disk 20, and a write-enable region 24 on which information can be written is located radially outwardly of the region 22, adjacent to the outer circumferential edge of the disk. Information is recorded on the read-exclusive region 22 according to a mark-length recording system and information is recorded on the write-enable region 24 according to a mark-position recording system.

As shown in Table 1, an area of the disk having a circular inner boundary at a radial distance of 35mm from the centre of the disk and a circular outer boundary at a radial distance of 70mm from that centre is allotted to the read-exclusive region 22, and an adjacent surrounding area thereof, between radial limits at 70mm and 105mm from the centre of the disk, is allotted to the write-enable region 24.

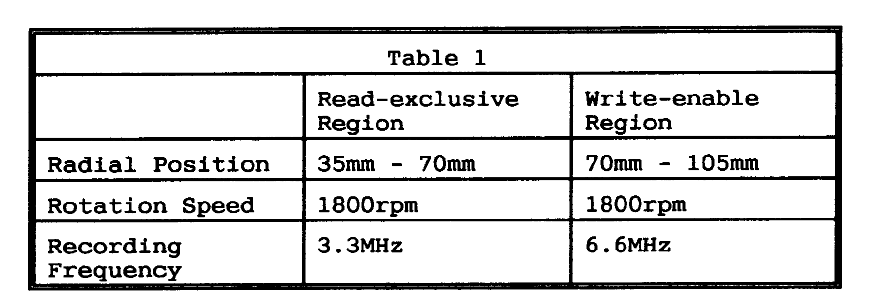

When information is to be recorded on the read-exclusive and write-enable regions 22 and 24, the rotational speed of the optical disk 20 is the same, namely 1800rpm, for both regions. However, the recording frequency for the read-exclusive region 22 is 3.3MHz while that for the write-enable region 24 is 6.6MHz.

It will be appreciated that recording frequency in this context means the maximum number of recording marks that can be recorded per second.

The recording of information is carried out according to the CAV (constant angular velocity) method, keeping the rotational speed of the disk 20 at 1800rpm.

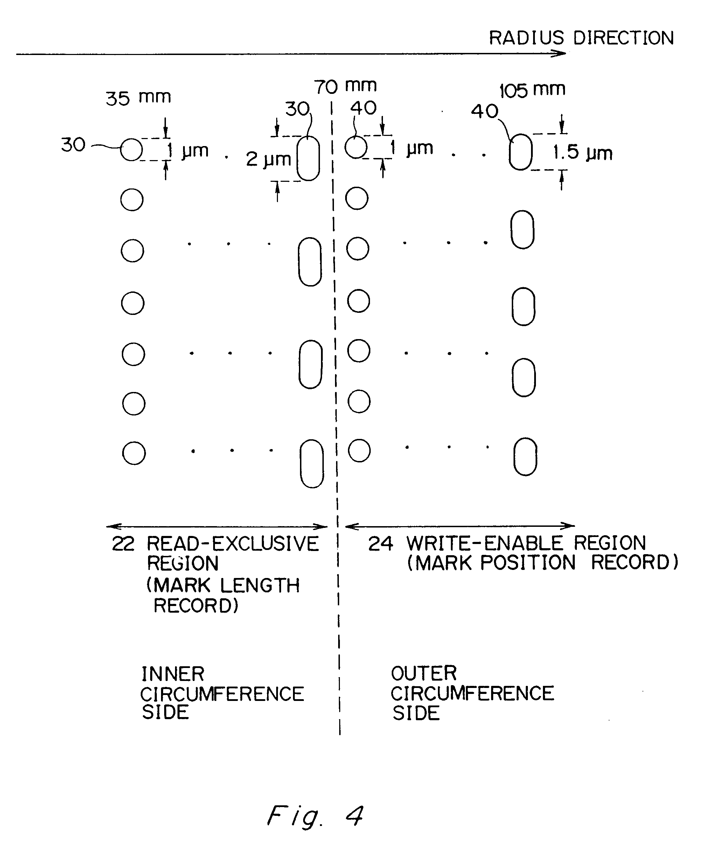

Figure 4 shows how information is recorded on the read-exclusive and write-enable regions 22 and 24.

Information is pre-recorded as pits (or holes) 30 on the read-exclusive region 22 and the minimum length of each of the pits 30 is 1»m at the radial position 35mm and 2»m at the radial position 70mm. This is because information is recorded at a fixed disk rotation speed (1800rpm) so that the linear speed of the disc at 70mm radius is twice that at the 35mm radius position.

Before the optical disk 20 is handed to users, a pre-format is formed on the write-enable region 24. More specifically the write-enable region 24 is provided with an ID section comprising a guide groove, for holding the laser beam spot at a certain position, and recorded sector numbers and track numbers for enabling sector positions to be identified. The length of each recording mark, constituted by a domain 40 (corresponding to a pit 30), is 1»m immediately outside the radial position 70mm and 1.5»m at the radial position 105mm, which is the outermost circumference of the write-enable region 24. This is because the same disk rotation speed (1800rpm) is used for recording on both the read-exclusive and write-enable regions 22 and 24, the recording frequency (maximum permitted mark frequency) being 6.6MHz in the write-enable region 24, which is double that in the read-exclusive region 22 (3.3MHz). As described above, information is recorded on the write-enable region 24 according to the mark-position recording system. For the same number of recorded marks per track, the memory capacity of the write-enable region 24, where information is recorded according to the mark-position recording system, would be only half that in the read-exclusive region 22, where information is recorded according to the mark-length recording system. However, since the recording frequency (6.6MHz) on the write-enable region 24 is made double that in the read-exclusive region 22 (3.3MHz), the memory capacity per track is the same on both read-exclusive and write-enable regions 22 and 24.

The rotational speed of the optical disk 20 for both read-exclusive region 22 and write-enable region 24 when information is read (or reproduced) is also 1800rpm, which is equal to that at which information is recorded. Therefore, the information reproducing frequency is 6.6MHz.

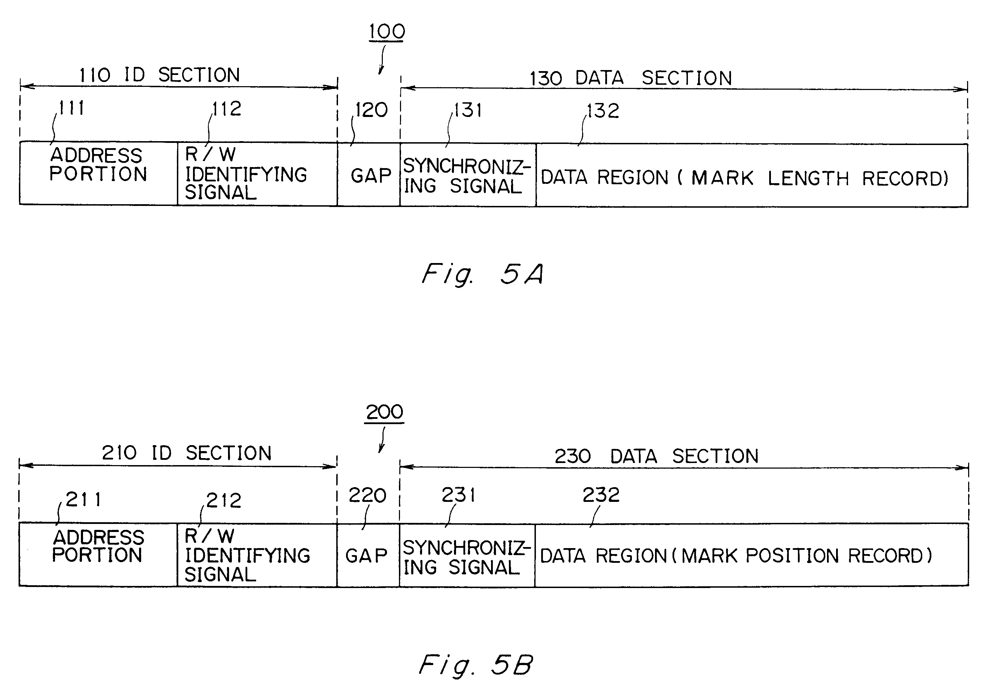

Figures 5A and 5B show formats of respective sectors in the read-exclusive and write-enable regions.

As shown in Figure 5A, the sector 100 in the read-exclusive region 22 comprises an ID section 110 including an address area 111 and an R/W identifying signal 112, a gap 120 where no information is recorded to allow for fluctuations in the rotation of the optical disk 20, and a data section including a synchro signal 131 and a data area 132.

The address area 111 includes information such as the track and sector members to allow the address of the sector to be identified. The R/W identifying signal 112 is intended to identify whether the sector lies within the read-exclusive region 22 or the write-enable region 24. The synchronizing signal 131 allows data recorded on the data area 132 to be read in synchronization with clocks.

The sectors 100 are recorded in the form of concaves and/or convexes on the disk's substrate.

As shown in Figure 5B, the sector 200 on the write-enable region 24 has the same arrangement as that on the read-exclusive region 22. It comprises an ID section 210 including an address area 211 where information is contained to allow the address for the sector 200 to be identified and an R/W identifying signal 212 which indicates that the sector 200 is for the write-enable region 24, a gap 220 similar to the gap 120, and a data section 230 including a synchro signal 231 similar to the synchronizing signal 131 and a data area 232 where data is recorded.

The recording of information is carried out by forming domains thermo-magnetically, whilst reproduction of information is carried out by directing a laser beam, which is weak in linear polarization, onto the domains.

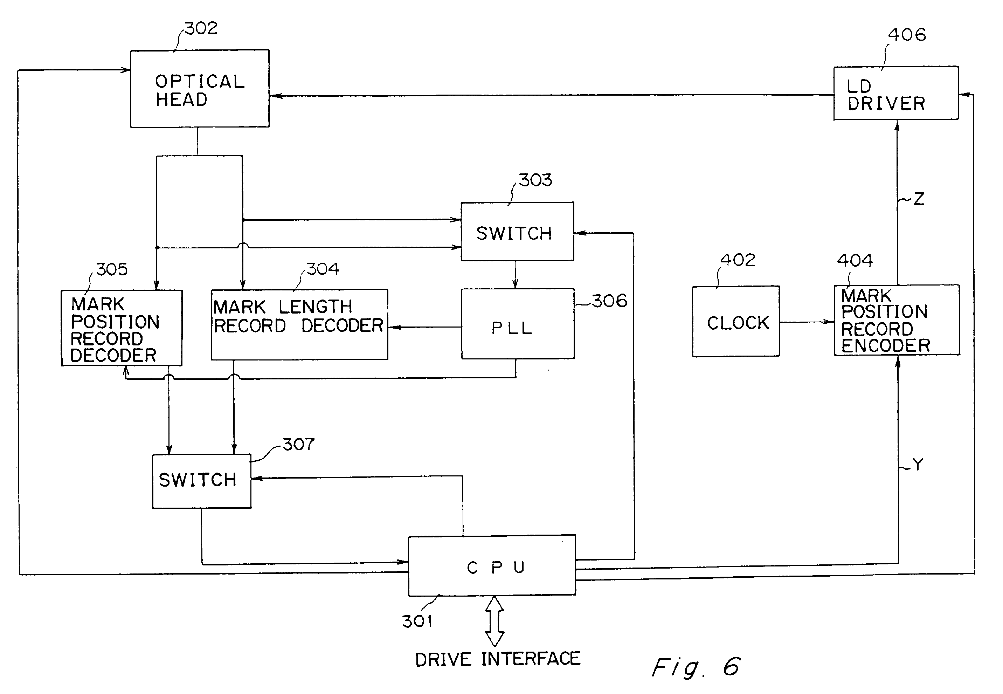

Figure 6 shows an example of disk drive circuitry for recording information on and reproducing information from the optical disk 20.

A CPU 301 controls blocks of the circuitry in response to commands supplied from an upper system, such as a host computer, through a drive interface. Data transmitted from the upper system is written into a sector on the optical disk 20 and data designated by the upper system is read from a sector on the optical disk 20 and transmitted to the upper system through the drive interface.

An optical head 302, comprising optical and drive systems, collects a laser beam emitted from a semiconductor laser, such as a laser diode, and directs the laser beam onto target positions on the optical disk 20 in order to record or erase information. The optical head 302 also converts light reflected from the optical disk 20 into electrical signals in order to reproduce information.

The optical system serves to focus the laser beam spot onto the optical disk 20 and detect the positional shift of the laser beam spot relative to target positions on the optical disk 20. This optical system comprises a semiconductor laser, lenses (coupling, focusing and objective lenses), prisms (beam splitter and knife-edge prism), a 1/4 wave plate and a photo-diode. The drive system controls focusing and tracking operations to cause the objective lens to follow tracks on the disk surface so that the position of the laser beam spot can be determined relative to the targets on the optical disk 20. The drive system consists mainly of a magnet, or/and coils and support members.

Data recorded on the optical disk 20 and coded according to mark-length or modulation is reproduced from optical head 302, converted into an electrical signal and transmitted to a switch 303, a mark-length recording decoder 304 and a mark-position recording decoder 305.

The optical disk 20 is rotated by a spindle motor (not shown) and a circuit for controlling the rotation of the spindle motor is also included in the disk drive circuit. This rotation control circuit is controlled by the CPU 301.

The disk drive circuit further includes servo control systems comprising a focusing servo-line (or system) for holding the laser beam waist in the vicinity of the recording surface of the optical disk 20, a seeking servo-line for moving the laser beam spot to the target track of the disk 20, and a tracking servo-line for causing the laser beam spot to follow the target track on the disk 20.

A mark-position recording encoder 404 synchronizes write data Y applied from the CPU 301 with a clock signal of 6.6MHz applied from a clock 402 to create a mark-position-modulated waveform train Z of binary values and applies it to a laser diode driver 406 (hereinafter referred to as an LD driver).

The LD driver 406 controls the laser beam of the laser diode in the optical head 302 in response to the applied waveform train Z. More specifically, when it receives a signal representing "1", LD driver 406 causes the laser diode to emit a strong laser beam, and when it receives a signal representing "0" it maintains the laser diode at a weak intensity.

Switches 303 and 307 serve to change over signals applied to their two input terminals and transmit them, depending upon whether the optical head 302 is in a mode for reading information from the read-exclusive region 22 (hereinafter referred to as ROM region read mode) or in a mode for reading information from the write-enable region 24 (hereinafter referred to as RAM region read mode).

Switch 303 transmits the code data which is read from the read-exclusive region 22 by the optical head 302 and which is mark-length-modulated to a PLL 306 under the ROM region read mode. It also transmits the code data which are read from the write-enable region 24 by the optical head 302, and which is mark-length-modulated, to the PLL 306 under the RAM region read mode. Code data read and mark-length-modulated under the ROM region read mode is applied to the mark-length recording decoder 304, while code data read and mark-position-modulated under the RAM region read mode is applied to the mark-position recording decoder 305.

The PLL 306 is a phase-locked-loop for generating a synchro signal in response to the fundamental period of code data applied through the switch 303. It supplied the synchro signal to the mark-length and mark-position recording decoders 304 and 305.

The mark-length and mark-position recording decoders 304 and 305 demodulate code data into data bit trains, in response to the synchro signals applied from the PLL 306, and transmits those bit trains to the switch 307.

The switch 307 transmits the data bit train from the mark-length recording decoder 304 to the CPU 301, under the ROM region read mode, while the data bit train from the mark-position recording decoder 305 is outputted to the CPU 301 under the RAM region read mode.

The CPU 301 transmits the data bit trains received from the switch 307 to the host computer through an interface (not shown).

The CPU 301 also controls the laser diode through the LD driver 406 in such a way that a weak laser beam is incident on a pit to be read under the ROM region read mode and the magnetic domain to be read under the RAM region read mode.

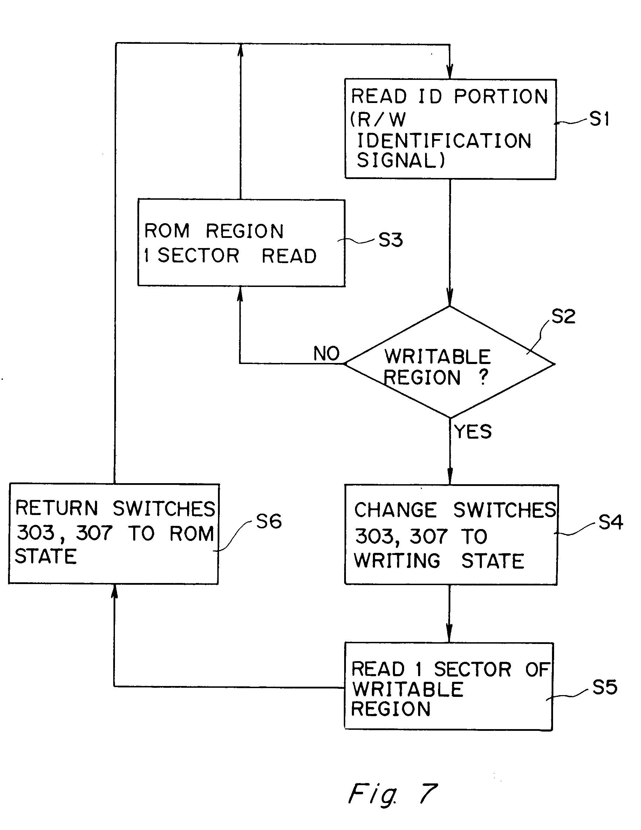

Next, the operation whereby data is read from a read-exclusive region 22 or is read from or written to a write-enable region 24 of the optical disk 20 is explained by referring to Figures 6 and 7.

Usually, upon reading, switches 303 and 307 are set in the ROM region reading mode.
1) Reading data from a sector of the read-exclusive region of the optical disk:
   When the CPU 301 receives the address information (track and sector numbers) of data to be read, the optical disk 20 is rotated at 1800rpm using the rotation control system, and a weak laser beam from the laser diode and controlled by the LD driver 406 in the optical head 302 is caused to be incident on the rotating optical disk 20, so that the ID section 110 of a sector 100 of the track denoted by the track number contained in the address information can be read. This reading of the ID section 110 is carried out using the optical head 302, mark-length recording decoder 304 and switch 307. When the ID section 110 is read out, the R/W identification signal (S1) is examined to determine whether the sector designated by the address portion 111 is within a read-exclusive region or within a write-enable region. When the sector is judged to be in the read-exclusive region (S2), 1 sector in the ROM region is read out (S3). The target sector 100 is detected by successively reading the ID sections 110. When it is thus detected, its data area 132 is read through the optical head 302, mark-length recording decoder 304 and switch 307.
2) Reading data from a sector of the write-enable region on the optical disk:
   When the CPU 301 receives the address information (track and sector numbers) of data to be read, the optical disk 20 is rotated at 1800rpm using the rotation control system, and a weak laser beam from the laser diode and controlled by the LD driver 406 in the optical head 302 is made incident on the rotating optical disk 20, so that the ID section 210 of a sector 200 of the track denoted by the track number contained in the address information can be read. This reading of the ID section 210 is carried out using the optical head 302, mark-length recording decoder 304 and switch 307. When the ID section 210 is read out, its R/W identification signal (S1) is used to determine whether the sector designated by the address portion 111 is within a read-exclusive region or within a write-enable region. When the sector is judged to be in the write-enable region (S2), switches 303 and 307 are set to RAM region reading mode (S4). When the target sector 200 is recognized, upon reading an ID section 210, its data region 232 is read out using the optical head 302, mark-position recording decoder 305 and switch 307 (S5). After reading the target sector, the switches 303 and 307 are returned to the ROM region reading mode (S6).
3) Writing data into a sector of the write-enable region on the optical disk:
   When the CPU 301 receives the address information (track and sector numbers) of data to be read, the optical disk 20 is rotated at 1800rpm using the rotation control system, and a weak laser beam from the laser diode and controlled by the LD driver 406 in the optical head 302 is directed onto the rotating optical disk 20, so that the ID section 210 of a sector 200 of the track denoted by the track number contained in the address information can be read. This reading of the ID section 210 is carried out using the optical head 302, mark-length recording decoder 304 and switch 307. The R/W identification signal of the sector designated by the address information is used to determine whether the sector is within read-exclusive area 22 or within write-enable region 24. Then the target information is written into the data area 232 of the target sector 200 of the write-enable region 24 using the mark-position recording encoder 404, LD driver 406 and optical head 302. Where the R/W identifying signal indicates that the sector is not within the write-enable region 24, then the writing operation is not conducted.

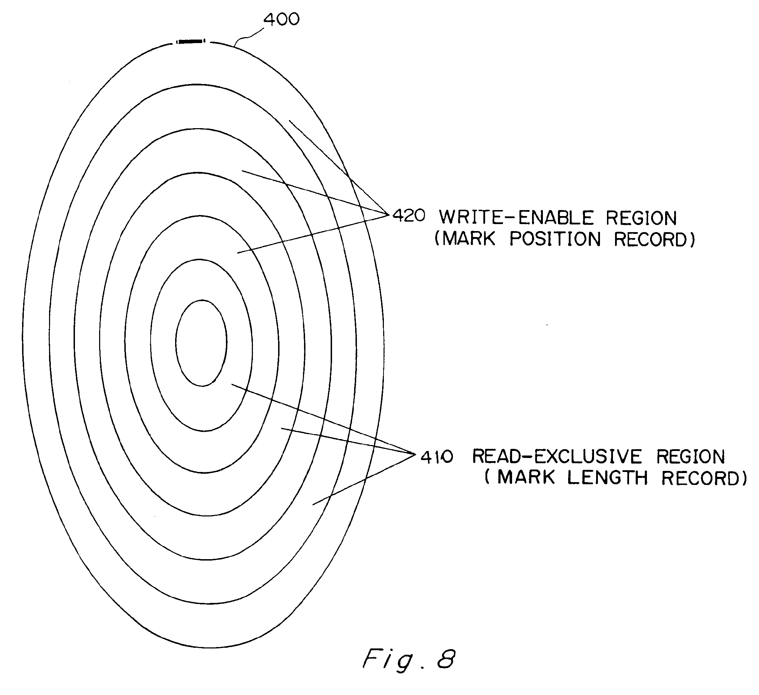

Figure 8 shows a second example of an optical disk embodying the present invention.

Read-exclusive and write-enable regions 410 and 420 respectively are alternately arranged on the optical disk 400, from an inner circumferential region to the outer circumferential edge of the optical disk 400.

Information is recorded on the read-exclusive regions 410 according to the mark-length recording system and on the write-enable regions 420 according to the mark-position recording system.

A first application of the second optical disk 400 will be described below. Information recording on the optical disk 400 is carried out under the conditions shown in Table 2.

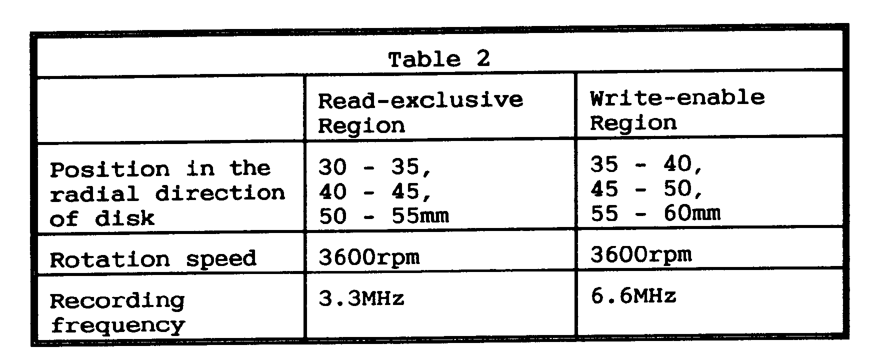

As shown in Table 2, read-exclusive regions 410, each 5mm wide, are concentrically arranged on the optical disk 400 at 5mm intervals, with a write-enable region 420 interposed between successive regions 410. The radial extents of the regions 410 on the disk are respectively from 30 to 35mm, from 40 to 45mm, and from 50 to 55mm. Write-enable regions 420, each 5mm wide, are also concentrically arranged on the optical disk 400 at 5mm intervals, alternating with read-exclusive regions and extending radially from 35 to 40mm, from 45 to 50mm, and from 55 to 60mm.

When the information is to be reproduced or recorded in both the read-exclusive regions 410 and the write-enable regions 420, the rotation of the disk 400 is controlled according to the CAV system. Thus the optical disk 400 is rotated at a constant speed of 3600rpm. Information is recorded on the read-exclusive regions 410 at a recording frequency of 3.3MHz and on the write-enable regions 420 at a recording frequency of 6.6MHz.

For this first application of the second optical disk 400, the recording frequency on the write-enable regions 420 is made double that on the read-exclusive regions 410, thus providing identical storage capacities per track on both regions 410 and 420.

When read-exclusive and write-enable regions 410 and 420 are alternately arranged on the optical disk 400 in the radial direction thereof, as described above, the optical head 302 may need to be moved only 5mm on the optical disk 400 in the radial direction thereof in order to write new information. Thus, if old information is recorded at the radial position 30mm, on the read-exclusive region 410, corresponding new information may be written in an optional sector of an adjacent write-enable region 420, enabling access to be gained to the information at a higher speed than is possible on the first optical disk 20 where the optical head must be moved at least 70mm in the radial direction thereof.

Since read-exclusive regions 410 are arranged concentrically on the optical disk 400, with write-enable regions 420 interposed between them as described above, new information relating to information recorded on a read-exclusive region 410 can be written on a write-enable region 420 as near as possible to the centre of the optical disk 400, thereby enabling access time to be shortened.

A second application of the second optical disk 400 will be described below. Here, information recording on the optical disk 400 is carried out under the conditions shown in Table 3.

As shown, read-exclusive and write-enable regions 410 and 420 are alternately arranged radially on the optical disk 400, as seen in the case of the first application of the second optical disk 400, but the angular velocity of the optical disk 400 is made lower for writing and erasing cycles. The rotation speed of the disk is set at 2400rpm only when information is written on and erased from the optical disk 400.

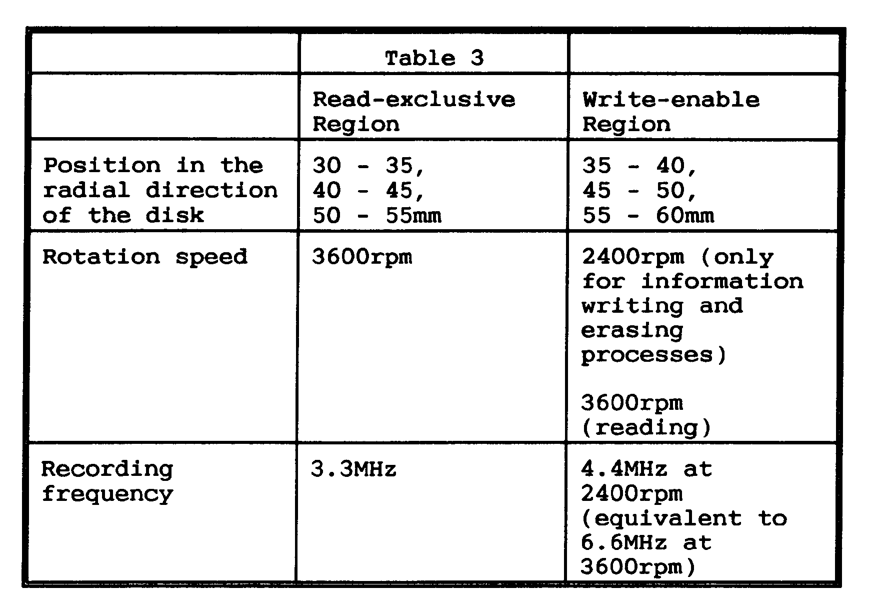

The angular velocity is made low only for information writing and erasing processes. This is to compensate for the fact that when the strength per unit area of a laser beam is low and the angular velocity is high, recording sensitivity becomes low. The rotation speed of the optical disk 400 is set to 2400rpm or less when information is written on or erased from the write-enable regions 420. In addition, the recording frequency is set to 4.4MHz or less to enable the write-enable regions 420 to have the same storage capacity per track as in the first application of the second optical disk 400.

The rotation speed of the optical disk 400 for the information reading process is set at 3600rpm for both the read-exclusive and write-enable regions 410 and 420 and the rotation control of the disk for this process is carried out in the same manner as in the first application of the second optical disk 400.

A third application of the second optical disk 400 will now be described. Information recording is carried out under the conditions as shown in Tables 4 and 5. Table 4 shows the conditions under which information recording is conducted on the write-enable regions 420 and Table 5 shows the conditions under which information recording is carried out on the read-exclusive regions 410.

As is apparent from positions in the radial direction of the disk shown in Tables 4 and 5, the read-exclusive and write-enable regions 410 and 420 are alternately arranged on the disk in the radial direction thereof as seen in the first and second applications of the second optical disk.

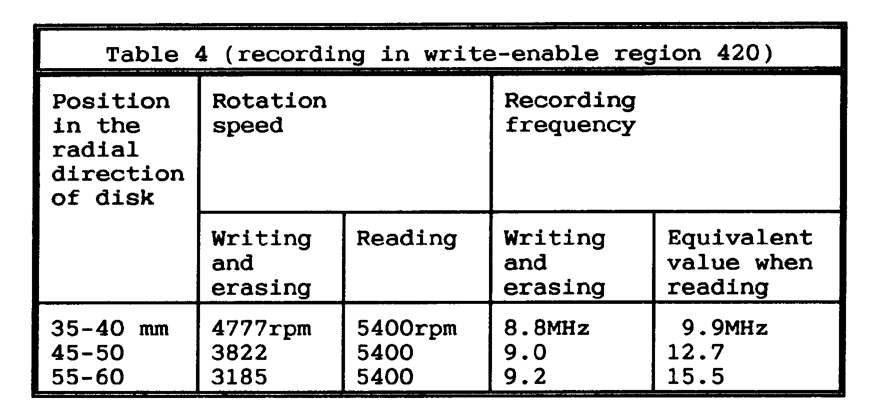

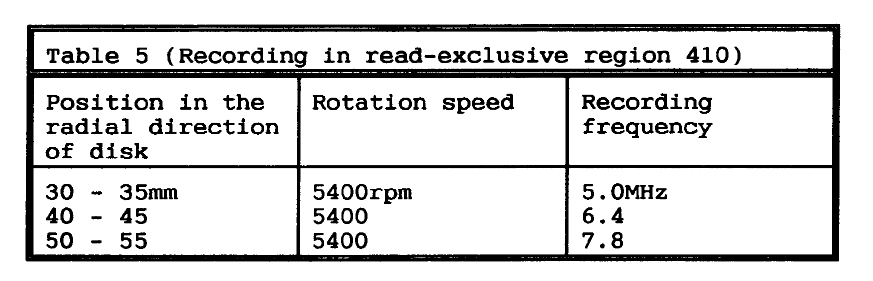

As shown in Table 4, the rotation speeds of the disk 400 for the information writing and erasing processes are set at 4777rpm, 3822rpm and 3185rpm on the respective write-enable regions 420 extending from 35 to 40mm, from 45 to 50mm and from 55 to 60mm. Thus, a linear velocity of 20m/sec is maintained at positions 40mm, 50mm and 60mm respectively from the centre of the disk.

Corresponding to these rotation speeds, respective recording frequencies are set at 8.8 (more precisely 8.75)MHz, 9.0MHz and 9.2(more precisely 9.17)MHz on the write-enable regions 420 so as to maintain the bit length (or domain length) at 1»m at respective positions 35mm, 45mm and 55mm from the disk centre.

The rotation speed of the disk used when information is read from the write-enable regions 420 is constant, at 5400rpm. Therefore, frequencies (reproducing frequencies or reading clock signal frequencies) for reading information from the write-enable regions 420 are 9.9MHz, 12.7MHz and 15.5MHz for the respective write-enable regions 420 extending radially from 35 to 40mm, from 45 to 50mm and from 55 to 60mm.

As shown in Table 5, the rotation speed of the disk for the read-exclusive regions 410 is set at 5400rpm in the same manner as for the write-enable regions 420, but the recording frequencies are set at 5.0MHz, 6.4MHz and 7.8MHz for the respective read-exclusive regions 410 extending radially from 30 to 35mm, from 40 to 45mm and from 50 to 55mm. That is, the recording frequency for a read-exclusive region 410 is set at half the recording frequency for the adjacent write-enable region 420 surrounding that region 410.

The variation of the recording sensitivity in respective write-enable regions 420 can be made small by changing the angular velocity in several stages. In the case of the first and second applications of the second optical disk 400, however, the rotation speed of the disk employed when information is written and erased is the same (3600rpm) for all of the write-enable regions 420. The linear velocity becomes higher as it approaches the outer circumference of the disk, leading to a reduction in recording sensitivity as mentioned above. The third application of the second disk 400 is intended to reduce this problem.

For the above-described embodiments of the present invention, the write-enable region is a recording film of a type on which information can be recorded according to a light modulation system. However, the recording film may be made of other materials, such as a vertical magnetic material, which enables information to be recorded according to the magnetic modulation of the system, or an optical memory material of the phase change type.

The rotation speeds and recording frequencies employed by the above-described embodiments are not limited to the above-mentioned values, but may be freely selected depending upon how the optical disk is to be used.

An embodiment of the present invention comprises two kinds of the regions, namely a read-exclusive region, on which information is prerecorded and from which information can only be read out, and a write-enable region on which information is rewritable. Information that must not be overwritten is recorded in a read-exclusive region so as to prevent inadvertent rewriting of that information. However, the user can use the write-enable region as a work region, thereby enabling an optical disk embodying the present invention to be applied to various uses, achieving great practical advantages.

## Claims

1. An optical disk (20,400) having a read-exclusive region (22,410) and a write-enable region (24,420), the said write-enable region (24,420) being located on the disk radially outwardly of the said read-exclusive region (22,410), characterised in that information is recorded on tracks in the said read-exclusive region (22,410) in accordance with a mark-length recording system having a first maximum permitted number of recording marks per track, and information is recorded on tracks in the said write-enable region (24,420) in accordance with a mark-position recording system having a second maximum permitted number of recording marks per track, which second number is double the said first number so that reading of the information on the said write-enable region (24,420) can be carried out with the disk rotating at an angular velocity such that the information on the said read-exclusive region (22,410) can be read without changing that angular velocity.

2. An optical disk as claimed in claim 1, having at least one further pair of recording regions constituted respectively by a read-exclusive region (22,410), on which information is recorded in accordance with a mark-length recording system, and a write-enable region (24,420) on which information is recorded in accordance with a park-position recording system having a maximum permitted number of recording marks per track that is substantially double the number permitted on the read-exclusive region (22,410) of the pair concerned, the or each such further pair of recording regions being arranged concentrically with the read-exclusive (22,410) and write-enable regions (24,420) of claim 1 so that read-exclusive regions (22,410) alternate with write-enable regions (24,420) along a radius of the disk (20,400).

3. A method of using an optical disk according to claim 1, wherein mark-position recording of information on the said write-enable region (24,420) is carried out with the disk (20,400) rotating at an angular velocity lower than that employed when reading information from the said read-exclusive region (22,410), reading of information from the said write-enable region (24,420) being carried out with the disk (20,400) rotating at the same angular velocity as that employed when reading information from the said read-exclusive region (22,410).

4. A method of using an optical disk according to claim 2, wherein mark-position recording on the different write-enable regions (24,420) is carried out with the disk (20,400) rotating at different respective angular velocities.

## Patentansprüche

1. Eine optische Platte (20, 400) mit einer Exklusiv-Lese-Zone (22, 410) und einer Schreibfreigabezone (24, 420), welche Schreibfreigabezone (24, 420) auf der Platte von der genannten Exklusiv-Lese-Zone (22, 410) radial nach außen angeordnet ist, dadurch gekennzeichnet, daß Informationen auf Spuren in der genannten Exklusiv-Lese-Zone (22, 410) gemäß einem Zeichenlängenaufzeichnungssystem mit einer ersten maximal zulässigen Anzahl von Aufzeichnungszeichen pro Spur aufgezeichnet werden und Informationen auf Spuren in der genannten Schreibfreigabezone (24, 420) gemäß einem Zeichenpositionsaufzeichnungssystem mit einer zweiten maximal zulässigen Anzahl von Aufzeichnungszeichen pro Spur aufgezeichnet werden, welche zweite Anzahl das Doppelte der genannten ersten Anzahl beträgt, so daß das Lesen der Informationen auf der genannten Schreibfreigabezone (24, 420) ausgeführt werden kann, während die Platte mit solch einer Winkelgeschwindigkeit rotiert, daß die Informationen auf der genannten Exklusiv-Lese-Zone (22, 410) gelesen werden können, ohne jene Winkelgeschwindigkeit zu verändern.

2. Eine optische Platte nach Anspruch 1, mit wenigstens einem weiteren Paar von Aufzeichnungszonen, das jeweils gebildet ist durch eine Exklusiv-Lese-Zone (22, 410), auf der Informationen gemäß einem Zeichenlängenaufzeichnungssystem aufgezeichnet werden, und eine Schreibfreigabezone (24, 420), auf der Informationen gemäß einem Zeichenpositionsaufzeichnungssystem mit einer maximal zulässigen Anzahl von Aufzeichnungszeichen pro Spur aufgezeichnet werden, die im wesentlichen doppelt so groß wie die Anzahl ist, die auf der Exklusiv-Lese-Zone (22, 410) des betreffenden Paares zulässig ist, bei der das oder jedes solch weitere Paar von Aufzeichnungszonen mit den Exklusiv-Lese- (22, 410) und Schreibfreigabezonen (24, 420) von Anspruch 1 konzentrisch so angeordnet ist, daß sich Exklusiv-Lese-Zonen (22, 410) mit Schreibfreigabezonen (24, 420) längs eines Radius der Platte (20, 400) abwechseln.

3. Ein Verfahren zum Verwenden einer optischen Platte nach Anspruch 1, bei dem das Zeichenpositionsaufzeichnen von Informationen auf der genannten Schreibfreigabezone (24, 420) ausgeführt wird, während die Platte (20, 400) mit einer Winkelgeschwindigkeit rotiert, die niedriger als jene ist, die verwendet wird, wenn Informationen aus der genannten Exklusiv-Lese-Zone (22, 410) gelesen werden, das Lesen von Informationen aus der genannten Schreibfreigabezone (24, 420) ausgeführt wird, während die Platte (20, 400) mit derselben Winkelgeschwindigkeit wie mit jener rotiert, die verwendet wird, wenn Informationen aus der genannten Exklusiv-Lese-Zone (22, 410) gelesen werden.

4. Ein Verfahren zum Verwenden einer optischen Platte nach Anspruch 2, bei dem das Zeichenpositionsaufzeichnen auf den verschiedenen Schreibfreigabezonen (24, 420) ausgeführt wird, während die Platte (20, 400) mit verschiedenen jeweiligen Winkelgeschwindigkeiten rotiert.

## Revendications

1. Disque optique (20, 400) possédant une zone de lecture seule (22, 410) et une zone de validation d'écriture (24, 420), ladite zone de validation d'écriture (24, 420) étant située sur le disque radialement à l'extérieur de ladite zone de lecture seule (22, 410),
disque optique caractérisé en ce que l'information est enregistrée sur des pistes de ladite zone de lecture seule (22, 410) selon un système d'enregistrement par longueur de marque possédant un premier nombre maximum permis de marques d'enregistrement par piste, et une information est enregistrée sur des pistes dans ladite zone de validation d'écriture (24, 420) selon un système d'enregistrement par position de marque ayant un second nombre maximum permis de marques d'enregistrement par piste, le second nombre étant le double dudit premier nombre de telle façon qu'une lecture de l'information sur ladite zone de validation d'écriture (24, 420) puisse être effectuée le disque tournant à une vitesse angulaire telle que l'information sur ladite zone de lecture exclusive (22, 410) puisse être lue sans modifier cette vitesse angulaire.

2. Disque optique selon la revendication 1, possédant au moins une paire supplémentaire de zones d'enregistrement respectivement constituée par une zone de lecture seule (22, 410) sur laquelle une information est enregistrée selon un système d'enregistrement par longueur de marque, et par une zone de validation d'écriture (24, 420) sur laquelle l'information est enregistrée selon un système d'enregistrement par position de marque ayant un nombre maximum permis de marques d'enregistrement par piste qui est pratiquement le double de celui permis sur la zone de lecture seule (22, 410) de la paire concernée, la ou chaque telle paire supplémentaire de zones d'enregistrement étant disposée, de façon concentrique, avec la zone de lecture exclusive (22, 410) et la zone de validation d'écriture (24, 420) selon la revendication 1 de telle façon que des zones de lecture seule (22, 410) alternent avec des zones de validation d'écriture (24, 420) le long d'un rayon du disque optique (20, 400).

3. Procédé d'utilisation d'un disque optique selon la revendication 1, selon lequel un enregistrement par position de marque de l'information sur ladite zone de validation d'écriture (24, 420) est effectuée avec le disque (20, 400) tournant à une vitesse angulaire inférieure à celle utilisée pour la lecture de l'information de ladite zone de lecture seule (22, 410), la lecture de l'information de ladite zone de validation d'écriture (24, 420) étant effectuée avec le disque (20, 400) tournant à la même vitesse angulaire que celle utilisée lors de la lecture de l'information de ladite zone de lecture seule (22, 410).

4. Procédé d'utilisation d'un disque optique selon la revendication 2, selon lequel un enregistrement par position de marque sur les différentes zones de validation d'écriture (24, 420) est effectué avec le disque (20, 400) tournant à différentes vitesses angulaires respectives.
